# EUROPEAN PATENT SPECIFICATION

(11) **EP 2 494 391 B1**
(45) Date of publication and mention of the grant of the patent: **07.12.2016**
(21) Application number: 10784558.8
(22) Date of filing: 27.10.2010
(51) Int. Cl.: G02B 6/00, H04M 1/22, G02B 6/42

(54) **LIGHT SOURCE AND PROCONDUCTOR COUPLING ARRANGEMENT**
KOPPLUNGSANORDNUNG ZWISCHEN EINER LICHTQUELLE UND EINEM LICHTLEITER
AGENCEMENT DE COUPLAGE ENTRE UNE SOURCE DE LUMIÈRE ET UN PHOTOCONDUCTEUR

(30) Priority: 28.10.2009 FI 20096108
(43) Date of publication of application: 05.09.2012
(73) Proprietor: Guangzhou Lite-On Mobile Electronic Components Co., Guangzhou 510760 (CN)
(72) Inventor: HIETALA, Joni, FI-37830 Viiala (FI); RISKI, Jari, FI-21600 Parainen (FI)
(74) Representative: Viering, Jentschura & Partner mbB Patent- und Rechtsanwälte
(86) International application number: PCT/FI2010/050853
(87) International publication number: WO 2011/051563

(56) References cited:
- EP-A1- 1 106 913
- EP-A1- 1 655 536
- EP-A1- 1 744 098
- JP-A- 11 260 136
- US-A1- 2004 183 774

## Description

### Background of the invention

The invention relates to a lighting arrangement that comprises a light-producing light source arranged to a mounting base, and a photoconductor, the light-receiving part of which is arranged to a light-transmitting relationship with the light source, the photoconductor being arranged to transmit light to an object to be illuminated.

The structures of electronic devices, in particular portable electronic devices, such as mobile phones, communicators, palmtop computers, portable computers, game consoles or controllers, playback devices for audio and/or visual material, or the like, typically comprise objects to be illuminated, such as keyboards and/or separate keys or operating switches, displays, and elements producing visual effects.

In prior art, the light required for illumination is produced by one or more light sources, most typically LEDs (Light Emitting Diodes) fastened to a circuit board. For various reasons, the light source usually cannot be arranged to the immediate vicinity of the object to be illuminated but away from it.

Light is brought from the light source to the object to be illuminated by a photoconductor. This is made of a translucent polymer material. The photoconductor is fastened to the structure of the device. The photoconductor may be quite a thick and rigid element made by injection moulding. However, to an increasing extent, photoconductor arrangements are used, in which the photoconductor is a thin film-like element, at most approximately 0.5 mm thick. The advantage of such a photoconductor is, among other things, that it needs very little space, which is a significant advantage in endeavouring to produce ever smaller structures and devices.

For instance, in the lighting arrangement of a mobile phone keyboard, a film-like photoconductor is arranged under the key mat. The key mat is, in turn, fastened to the cover of the device. When assembling a device, the circuit board and key mat are placed on top of each other so that the light-receiving part of the photoconductor is in the immediate vicinity of a LED to receive the light emitted by the LED. A problem with this type of lighting arrangement is that the lighting effect it provides - in this case in the keyboard - changes visibly as a result of the most minute position or place change between the light source and photoconductor. The part of the cover, to which the photoconductor is fastened, may move in relation to the frame and circuit board, or the key mat may move in relation to said cover part. Even minuscule position changes may cause visible changes in the lighting. Position and/or place changes between the light source and photoconductor occur quite easily even during ordinary use of the device.

EP 1 655 536 A1 discloses a lighting arrangement comprising a light-producing light source arranged to a mounting base, and a photoconductor, the light-receiving part of which is arranged to a light-transmitting relationship with the light source, the photoconductor being arranged to direct light to an object to be illuminated, the arrangement also comprises locking means for fastening the light-receiving part of the photoconductor to the same mounting base with the light source, wherein the photoconductor is a thin film photoconductor or film photoconductor having a thickness of at most 0.5 mm, wherein the locking means are arranged to a connector part that is fastened to said mounting base, and wherein the connector part (4) is a surface-mounted component and the mounting base is a circuit board.

Some further devices are known from EP 1 744 098 A1, JP 11 260136 A, EP 1 106 913 A1, and US 2004/183774 A1.

### Brief description of the invention

It is an object of the present invention to provide a novel and improved lighting arrangement, with which it is possible to avoid the above-mentioned problems.

The lighting arrangement of the invention is characterised in that the arrangement comprises locking means for fastening the light-receiving part of the photoconductor to the same mounting base with the light source.

The idea of the invention is that the light-receiving part of the photoconductor is fastened to the same mounting base, on a circuit board, for instance, as the light source that feeds light to the photoconductor - without fastening the photoconductor directly to the light source, however.

The invention provides the advantage that because the light source and photoconductor are fastened to the same mounting base, movement between the light source and photoconductor is reduced or even substantially eliminated. Owing to this, no uncontrolled changes occur in the lighting effect, that is to say that the quality of lighting is better than before.

The arrangement of the invention is characterised by what is disclosed in the characterizing part of claim 1 . Other embodiments of the invention are characterised by what is stated in the other claims. Inventive embodiments are also disclosed in the specification and drawings of this patent application. The inventive content of the patent application may also be defined in other ways than those defined in the following claims. The inventive content may also be formed of several separate inventions, especially if the invention is examined in the light of expressed or implicit sub-tasks or in view of obtained benefits or benefit groups. In such a case, some of the definitions container in the following claims may be unnecessary in view of the separate inventive ideas. Features of the different embodiments of the invention may within the scope of the basic inventive idea be applied to other embodiments.

The idea of an embodiment of the invention is that the locking means are arranged to a connector part that is fastened to said mounting base. The advantage is that the connector part speeds up the fastening of the photoconductor.

The idea of a second embodiment of the invention is that the light-receiving part is arranged to a projection that is essentially narrower than the light-emitting part of the photoconductor. The advantage is that the projection is easy to fasten to the connector part, whereby assembling the device is simple and fast.

The idea of a third embodiment of the invention is that the connector part comprises translucent material arranged so that the connector part may serve as a photoconductor. The advantage is that the direction of the light may be immediately changed in the connector part.

### Brief description of figures

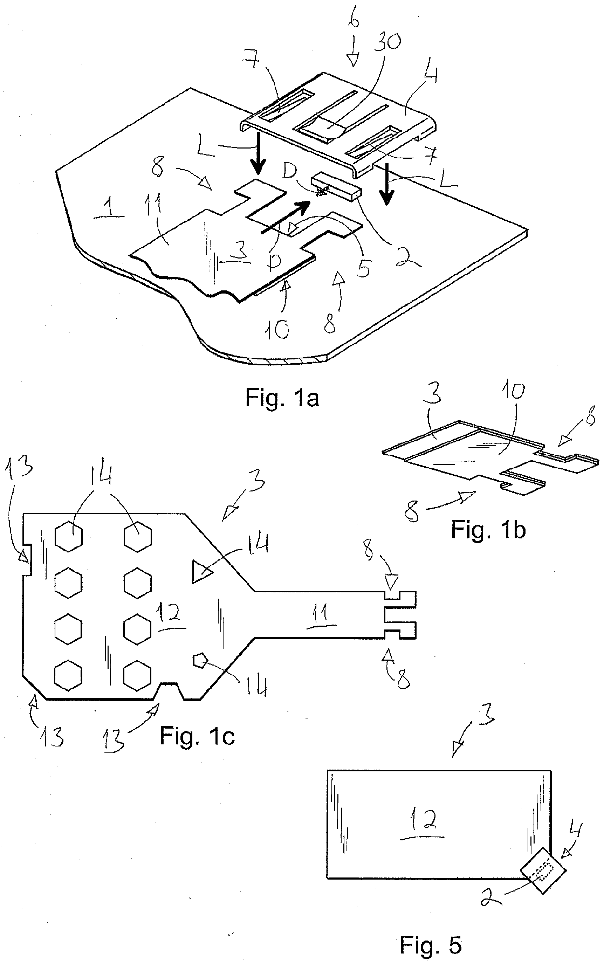

Some embodiments of the invention will be described in more detail in the attached drawings, in which
Figure 1 a is a schematic perspective top view of a lighting arrangement of the invention arranged on a circuit board,
Figure 1 b is a schematic perspective bottom view of a part of a photoconductor of the lighting arrangement shown in Figure 1 a,
Figure 1c is a schematic top view of the photoconductor of the lighting arrangement shown in Figure 1 a,
Figure 2a is a schematic perspective top view of a second lighting arrangement of the invention,
Figure 2b is a schematic perspective bottom view of a part of a photoconductor of the lighting arrangement shown in Figure 2a,
Figure 3 is a schematic perspective top view of a third lighting arrangement of the invention arranged on a circuit board before a photoconductor is fastened to locking means,
Figure 4a is a schematic perspective top view of a fourth lighting arrangement of the invention arranged on a circuit board before the parts of a connector part are attached to each other,
Figure 4b is a schematic perspective top view of the lighting arrangement of Figure 4a with the connector part assembled, and
Figure 5 is a schematic top view of a lighting arrangement of the invention.

In the figures, some embodiments of the invention are shown simplified for the sake of clarity. Similar parts are marked with the same reference numbers in the figures.

### Detailed description of the invention

Figure 1 a is a schematic perspective top view of a lighting arrangement of the invention arrangeable on a circuit board, Figure 1 b is a perspective bottom view of a special characteristic of a photoconductor used therein, and Figure 1 c is a top view of the photoconductor used in the lighting arrangement of Figure 1 a.

A light source 2 is fastened to a mounting base 1, the light source being a surface-mounted LED in this presented embodiment of the invention. The light emitted by the LED is directed in the direction of the plane of the circuit board 1 as shown by arrow D. Such "sidelight" LEDs and their fastening on a circuit board are known per se, so they need not be presented herein in more detail.

The light source may be a LED or any other light source known per se, such as a filament bulb, electroluminescent illuminator, or laser.

In this specification, the concept "light" refers to the wave motion on the visible light wavelength as well as to the wave motion on the ultraviolet or infra red wavelength.

The light source 2 emits light on a specific wavelength or wavelength region to the photoconductor 3. The photoconductor 3 typically transmits light onward without changing the wavelength, at least not substantially. However, in some embodiments of the invention, the photoconductor comprises material that changes the wavelength or wavelength distribution of the light supplied to the photoconductor.

The mounting base 1 is now a rigid circuit board that comprises an insulation layer or basic layer made of electrically non-conductive material and having an electrically conductive pattern on one or two surfaces thereof. The circuit board may also be a multilayer circuit board that is made of several conductive layers separated from each other by electrically non-conductive material layers. Alternatively, the circuit board serving as the mounting base 1 may be flexible, in other words, a circuit board that may be bent without breaking the structure at room temperature or a higher temperature.

The light emitted by the light source 2 is transmitted to the photoconductor 3 and directed along it to an object to be illuminated. The photoconductor 3 is a thin film photoconductor or film photoconductor having a typical thickness of at most 0.5 mm. The thickness of the photoconductor 3 may naturally also be greater.

Figure 1 a only presents the part of the photoconductor 3 that comprises a light-receiving part 5 of the photoconductor. This is now the part of the edge of the photoconductor 3 which is arranged on a projection 11 of the photoconductor. The light-receiving part 5 is arranged relative to the light source 2 in such a manner that the light provided by the latter may enter the photoconductor and on to the object to be illuminated.

The photoconductor 3 is fastened to its correct position relative to the light source 2 by means of a connector part 4. This is arranged on top of the light source 2 and fastened to the mounting base 1. The connector part 4 thus fastens the light source 3 to the mounting base 1 and not directly to the light source 2.

The connector part 4 shown in Figure 1 a is shaped to form a sort of cover on top of the light source 2. Space remains between the connector part 4 and mounting base 1 and the part of the photoconductor 3 that comprises the light-receiving part 5 is arranged into the space.

The connector part 4 is made of metal by bending and punching. It may naturally also be made in other ways and of materials belonging to other material groups, such as plastic.

The connector part 4 may be a surface-mounted component or a component fastened to holes made in the mounting base. The fastening may take place for instance during the same manufacturing step of other components to be fastened to the mounting base. The connector part 4 may be fastened to the circuit board by surface soldering, by soldering through the circuit board, or by using a screw, rivet, snap joint, glue, two-sided tape, or in some other manner known per se.

The connector part 4 comprises locking means 6, which in this case include spring members 7 formed by partially detaching them from the manufacturing blank of the connector part and by bending them outward. A tongue 30 is arranged to press the photoconductor 3 fastened to the connector part 4 against the circuit board 1.

The essential thing in the structure of the connector part 4 is that it comprises locking means 6 for fastening the photoconductor to the mounting base 1. For this purpose, counterparts 8 are provided in the photoconductor 3 to fasten the light-receiving part 5 of the photoconductor by shape-locking to the locking means 6 of the connector part. It should be noted that the connection between the photoconductor 3 and connector part 4 may also be of another type, such as a friction joint.

The counterparts 8 of the photoconductor 3 are arranged to the projection 11 that is essentially narrower than the light-emitting part 12 of the photoconductor shown in Figure 1 c.

In this specification, the concept "light-emitting part 12 of the photoconductor" refers to the part of the photoconductor, from which the light travelling in the photoconductor exits to the surroundings of the photoconductor. The light-emitting part 12 may be the front surface and/or back surface of the photoconductor, as in Figure 1 c, or a part of the edge of the photoconductor, or a combination of these.

Figure 1 b is a bottom view of the part of the photoconductor 3 shown in Figure 1 a. A stiffener element 10 that is essentially more rigid in material and/or in structure than the photoconductor is fastened to the photoconductor 3 by using glue or the like. The stiffener element 10 may be made of metal or plastic, for example, and it is dimensioned in the most appropriate manner with respect to the projection 11. The stiffener element 10 shown in the figure is clearly shorter than the projection 11, and it is a continuous structure as wide as the projection, but it may be equal in length to the entire projection 11, wider and/or narrower than the projection 11, and it may also comprise openings or other shapes that differ from the shapes of the photoconductor 3 at corresponding points. It may be substantially rigid, in which case the photoconductor 3 cannot be bent at the stiffener element 10, or flexible, in which case the photoconductor 3 is at least to some extent bendable at the stiffener element 10.

The stiffener element 10 stiffens and reinforces the thin photoconductor 3 so that it may be reliably fastened to the connector part 4. However, the stiffener element 10 is not an essential part of the arrangement.

The light source 2 and photoconductor 3 are thus connected to one and the same mounting base 1, in this case a circuit board, whereby any positional changes between them and lighting changes caused thereby may be eliminated or at least essentially minimized. The light source 2 and photoconductor 3 may be in contact with each other, or there may be an air gap between them.

Figure 1 c shows the entire photoconductor 3 from the top. It can be seen that the counterparts 8 are arranged to the projection 11 that is essentially narrower than the light-emitting part 12. The projection 11 and the light-emitting part 12 are integrated to each other, in other words, they form one seamless piece. In another embodiment of the invention, the projection 11 is made separate from the light-emitting part 12 and fastened thereto in a suitable manufacturing step.

The photoconductor 3 is, with the exception of the projection 11, functionally and structurally like a photoconductor known per se. Therefore, it may comprise functional parts 13, 14 that are arranged on its edges, that is, on the outer circumference or top and/or bottom surface. The functional parts 13, 14 act, among other things, to fasten the photoconductor, and as elements modifying the behaviour of light, such as elements affecting the direction of travel or scattering of light. This is known per se and, thus, need not be discussed in more detail in this specification.

The photoconductor 3 is in most cases fastened at its light-emitting part 12 to the object to be illuminated, such as a key mat. The projection 11 is, instead, typically only fastened at its end, that is, at the counterparts 8. Because the projection 11 is made of flexible material, the counterparts 8 may be moved quite freely in relation to the light-emitting part 12. It is for instance possible to first fasten the light-emitting part 12 to the device or a part thereof - such as a key mat - and then fasten the counterparts 8 by means of the connector part 4 to the mounting base by suitably bending the projection 11. In addition, the connector part 4 guides the light-receiving part 5 of the photoconductor automatically to its correct position in relation to the light source 2. All in all, mounting the photoconductor 3 is easier, faster and, thus, also less costly than in the prior art. The invention makes it possible to mount a film-like photoconductor in place during the final assembly of the device, for example.

The photoconductor 2 is typically only fastened to the mounting base 1 by the counterparts 8 through the connector part 4, but in some embodiments of the invention, the photoconductor 2 is fastened by its light-emitting part 12, for example, to the same mounting base 1 as the light source 2.

The above already reveals that the object to be illuminated may be the keyboard or one or more keys of a mobile phone. Other objects to be illuminated by the invention include illuminated decorations to be arranged on the cover of an electronics device, illuminated displays, such as LCD displays, and any illuminated objects, in the immediate vicinity of which it is not possible or, for some reason, advantageous to arrange a light source.

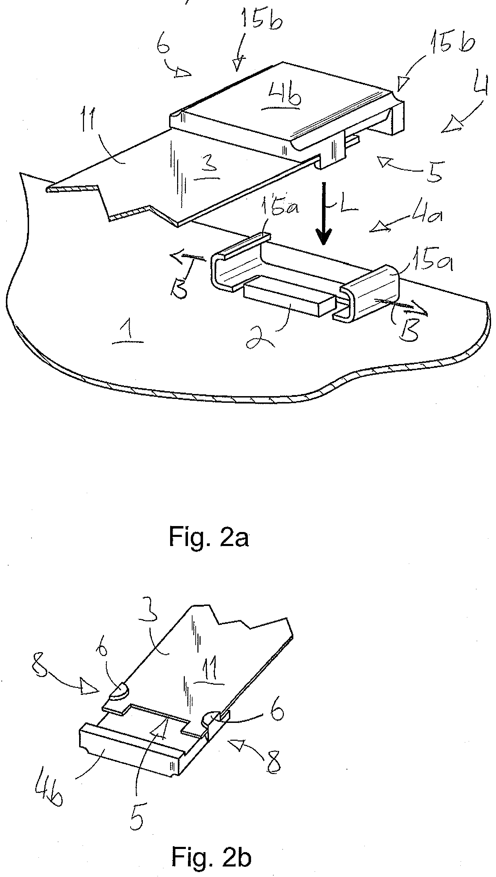

Figures 2a and 2b are schematic perspective top views of a second lighting arrangement of the invention, and Figure 2b is a schematic perspective bottom view of a part of a photoconductor of the lighting arrangement shown in Figure 2a.

The connector part 4 has two parts and comprises a first part 4a made of metal and fastened to the mounting base 1 using a solder, screw, rivet, snap joint, tape, or glue, for instance.

The connector part 4 further comprises a second part 4b made of plastic by injection-moulding, for instance, and fastened to the first part 4a. It should be noted in this context that the materials of the parts and the fastening method of the first part 4a to the mounting base 1 may also be selected differently.

The first part 4a locks into the second part 4b when they are pressed against each other in the manner shown by arrow L. First fastening parts 15a arranged to the first part 4a then temporarily bend into the opposing directions shown by arrows B away from the second part 4b. When the second part 4b is in place, the first fastening parts 15a reverse and fasten to groove-like second fastening parts 15b, thus locking the parts 4a, 4b to each other by shape locking. The photoconductor 3 is fastened between said parts 4a, 4b, and it may have the earlier described stiffener element 10. The connector part 4 may, if necessary, be opened and the photoconductor 3 removed by bending the first fastening parts 15a away from each other.

A multipart connector part 4 may contain more than two parts.

Figure 2b shows the second part 4b and the photoconductor 3 fastened thereto from the bottom. The photoconductor 3 is first fastened to the locking means 6 belonging to the second part 4b and integrated thereto by arranging the counterparts 8 formed in the photoconductor 3 in them. This provides a shape lock between the connector part 4 and photoconductor 3.

The second part 4b is fastened to the first part 4a that is already fastened to the mounting base 1 by a movement in the direction of arrow L, which is at least substantially a movement in the direction of the normal of the mounting base 1. The light-receiving part 5 of the photoconductor is thus locked substantially stationary relative to the light source 2, whereby the quantity and/or quality of light entering the photoconductor 3 is as independent as possible of the position of the device and the accelerations directed to the device.

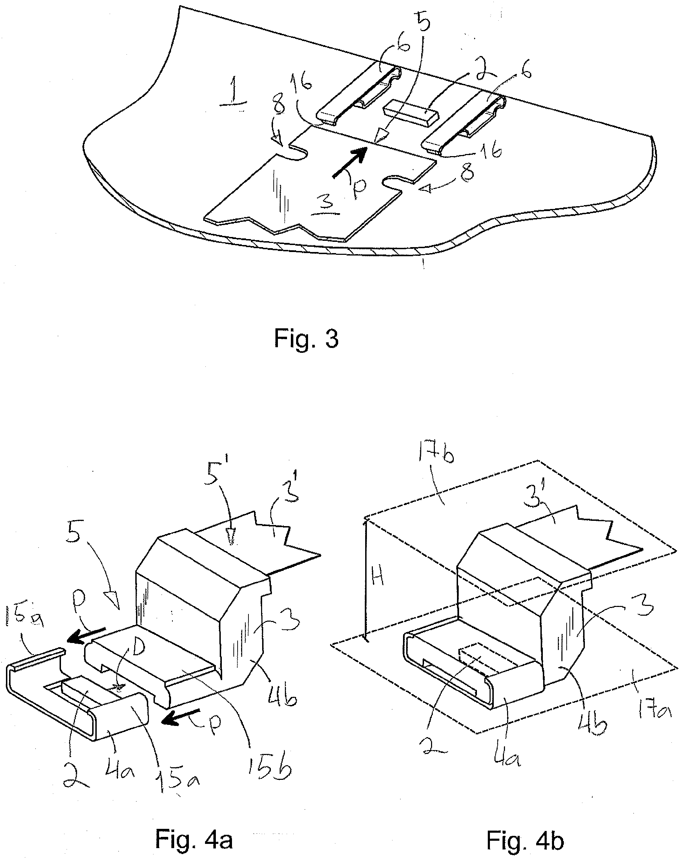

Figure 3 is a schematic perspective top view of a third lighting arrangement of the invention arranged on the mounting base and before the photoconductor is fastened to the locking means.

The locking means 6 are functionally spring means that are arranged parallel and on both sides of the LED serving as the light source 2. The locking means 6 are made of metal and, in this case, fastened by soldering at their first ends to a circuit board acting as the mounting base 1.

At the other end of each locking means 6, brackets 16 are formed to act as holders, the distance of which from the mounting base 1 changes as the locking means 6 bends. The spring-back force of the locking means 6 endeavours to force the brackets 16 toward the mounting base 1.

Recesses acting as counterparts 8 are formed on the sides of the photoconductor 3. The brackets 16 of the locking means push into said recesses when the photoconductor 3 is pushed sufficiently far between the locking means 6 and mounting base 1 in the direction shown by arrow P. When the brackets 16 are in the counterparts 8, the photoconductor 3 is locked into a position, in which the light emitted by the light source 2 is directed to the light-receiving part 5 of the photoconductor.

Figure 4a is a schematic perspective top view of a fourth lighting arrangement of the invention arranged on a circuit board before the parts of the connector part are attached to each other, and Figure 4b shows it after the parts of the connector part are attached to each other.

The connector part 4 has two parts and comprises a first part 4a and a second part 4b. The parts 4a and 4b fasten to each other by a friction connection that is created when the second fastening part 15b arranged in the second part 4b is pushed between the first fastening parts 15a arranged in the first part 4a.

The second part 4b is made of translucent material so as to serve as the photoconductor 3. In the present embodiment, the second part 4b is made entirely of one and the same translucent material. In another embodiment of the invention, only the part serving as the photoconductor in the second part 4b is made of translucent material, while the rest of it is made of opaque material. It should be noted that the mounting base 1 is not shown in Figures 4a and 4b.

The connector part 4 is fastened to the mounting base on a first spatial plane 17a. A second, parallel spatial plane 17b is at a distance H from this. The light emitted by the LED serving as the light source 2 is directed through the light-receiving part 5 to the second part 4b. The second part 4b directs the light from the fastening plane of the LED 2, that is, the first plane 17a, upward and on to the second spatial plane 17b. The light exits from the second part 4b as a light beam in the direction of the second spatial plane 17b.

In some other connector parts 4 acting as photoconductors 3, the light is turned away from the direction D of the light provided by the light source. In other words, the direction of the light exiting the connector part 4 differs from the direction D of the light entering it. There may be quite a small angular difference, for instance 1°, or a considerably larger than this, for instance 90° or 180°, between the light entering and exiting the connector part 4. The connector part 4 serving as the photoconductor may naturally also be such that it transmits light in the direction provided by the light source and on plane D, in other words, it does not change the direction of the light at all. Further, it is clear that the connector part 4 serving as the photoconductor may also be such that it does not substantially direct the light from one spatial plane to the other and/or change the direction of the light in one way or another.

To the second part 4b of the connector part, a second photoconductor 3' is fastened having its light-receiving part 5' arranged so that the light exiting from the second part 4b is efficiently directed by the second photoconductor 3' on to the object to be illuminated. It should be noted that Figures 4a, 4b do not show the locking means or their complementary counterparts that fasten the second photoconductor 3' to the second part 4b, or the object to be illuminated. It should further be noted that the second photoconductor 3' can naturally be left out of the arrangement, if it is not needed.

Figure 5 is a schematic top view of a lighting arrangement of the invention. Herein, the photoconductor 3 does not comprise a projection 11, but the connector part 4 is arranged into the corner of a mainly rectangular photoconductor film. The light source 2, shown in the figure by a dotted line, is placed under cover of the connector part 4.

It should be noted in this context that in the embodiments of the invention described above, the mounting base 1 is a circuit board. The circuit board may be a hard or rigid circuit board or a flexible one. Instead of a circuit board, the mounting base 1 may be any element to which a light source 2 may be fastened.

In some cases, the features described in this application may be used as such, regardless of other features. On the other hand, the features described in this application may also be combined to provide various combinations as necessary.

The drawings and the related description are only intended to illustrate the idea of the invention. It is apparent to a person skilled in the art that the invention is not restricted to the embodiment described above, in which the invention is described by way of example, and many modifications and different embodiments of the invention are possible within the scope of the inventive idea defined in the following claims.

## Claims

1. A lighting arrangement comprising
a light-producing light source (2) arranged to a mounting base (1), and
a photoconductor (3), the light-receiving part (5) of which is adapted to be arranged to a light-transmitting relationship with the light source (2), the photoconductor being arranged to direct light to an object to be illuminated, the arrangement also comprises
locking means (6) for fastening the light-receiving part (5) of the photoconductor (3) to the same mounting base (1) with the light source (2), wherein the photoconductor (3) is a thin film photoconductor or film photoconductor having a thickness of at most 0.5 mm, **characterised in that**
the loking means (6) are arranged to a connector part (4) that is fastened to said mounting base (1), and that
the connector part (4) is a surface-mounted component and the mounting base (1) is a circuit board, and that
the connector part (4) is a multipart component, a first part (4a) of which is arranged to be fastened to the mounting base (1) and a second part (4b) of which is arranged to be fastented to the first part (4a) so that a structure fastening the photoconductor (3) to the mounting base (1) is formed.

2. An arrangement as claimed in claim **1, characterised in that** the mounting base (1) is a rigid circuit board.

3. An arrangement as claimed in claim **1, characterised in that** the mounting base (1) is a flexible circuit board.

4. An arrangement as claimed in any one of the preceding claims, **characterised in that** the connector part (4) comprises translucent material and that the connector part (4) is arranged to act as a photoconductor.

5. An arrangement as claimed in claim 4, **characterised in that** the connector part (4) is arranged to change the direction of the light propagating therein.

6. An arrangement as claimed in any one of the preceding claims, **characterised in that** the photoconductor (3) comprises a counterpart (8) that is arranged to the locking means (6) so as to provide a shape lock between the photoconductor (3) and locking means (6).

7. An arrangement as claimed in any one of preceding claims 1 to 6, **characterised in that** there is a friction lock between the photoconductor (3) and locking means (6).

8. An arrangement as claimed in any one of the claims 1 to 5, **characterised in that** the photoconductor (3) is detachable from the locking means (6).

9. An arrangement as claimed in claim 8, **characterised in that** a photoconductor (3) is fastenable to the locking means (6), from which a photoconductor (3) has been detached.

10. An arrangement as claimed in any one of the preceding claims, **characterised in that** the light-receiving part (5) is arranged to a projection (11) that is essentially narrower than the light-emitting part (12) of the photoconductor (3).

11. An arrangement as claimed in any one of the preceding claims, **characterised in that** a stiffener element (10) is arranged to the photoconductor (3) to stiffen the part of the photoconductor (3) that is arranged to the locking means (6).

12. An electronic device, preferably a mobile phone, **characterised in that** it comprises the arrangement as claimed in claim 1.

13. An electronics device as claimed in claim 12, **characterised in that** the object to be illuminated is a keyboard, a key, an illuminated decoration arranged to its cover part, or a display.

## Patentansprüche

1. Eine Beleuchtungsanordnung aufweisend
eine lichtproduzierende Lichtquelle (2), welche an einem Montagesockel (1) angeordnet ist, und einen Photoleiter (3), dessen Lichtempfangsteil (5) angepasst ist, um in einer Lichtübertragungs-Beziehung mit der Lichtquelle (2) angeordnet zu sein, wobei der Photoleiter angeordnet ist, um Licht auf ein zu illuminierendes Objekt zu lenken, wobei die Anordnung ferner aufweist,
ein Verriegelungsmittel (6) zum Befestigen des Lichtempfangsteils (5) des Photoleiters (3) an dem gleichen Montagesockel (1) mit der Lichtquelle (2), wobei der Photoleiter (3) ein Dünnfilm-Photoleiter oder ein Film-Photoleiter ist, der eine Dicke von maximal 0,5 mm hat, **dadurch gekennzeichnet, dass**
das Verriegelungsmittel (6) an einem Verbindungsteil (4) angeordnet ist, welches an dem Montagesockel (1) befestigt ist, und dass
das Verbindungsteil (4) ein flächenmontiertes Bauteil ist und der Montagesockel (1) eine Leiterplatte ist, und dass
das Verbindungsteil (4) ein mehrteiliges Bauteil ist, von dem ein erster Teil (4a) so angeordnet ist, dass er an dem Montagesockel (1) befestigt ist, und ein zweiter Teil (4b) so angeordnet ist, dass er an dem ersten Teil (4a) befestigt ist, sodass eine Struktur gebildet ist, die den Photoleiter (3) an dem Montagesockel (1) befestigt.

2. Eine Anordnung gemäß Anspruch 1, **dadurch gekennzeichnet, dass** der Montagesockel (1) eine starre Leiterplatte ist.

3. Eine Anordnung gemäß Anspruch 1, **dadurch gekennzeichnet, dass** der Montagesockel (1) eine flexible Leiterplatte ist.

4. Eine Anordnung gemäß irgendeinem der vorhergehenden Ansprüche, **dadurch gekennzeichnet, dass** das Verbindungsteil (4) ein lichtdurchlässiges Material aufweist, und dass das Verbindungsteil (4) angeordnet ist, um als ein Photoleiter zu wirken.

5. Eine Anordnung gemäß Anspruch 4, **dadurch gekennzeichnet, dass** das Verbindungsteil (4) angeordnet ist, um die Richtung von sich darin ausbreitendem Licht zu ändern.

6. Eine Anordnung gemäß irgendeinem der vorangegangenen Ansprüche, **dadurch gekennzeichnet, dass** der Photoleiter (3) ein Gegenstück (8) aufweist, das an dem Verriegelungsmittel (6) angeordnet ist, um zwischen dem Photoleiter (3) und dem Verriegelungsmittel (6) einen Formschluss bereitzustellen.

7. Eine Anordnung gemäß irgendeinem der vorangegangenen Ansprüche 1 bis 6, **dadurch gekennzeichnet, dass** es zwischen dem Photoleiter (3) und dem Verriegelungsmittel (6) einen Reibschluss gibt.

8. Eine Anordnung gemäß irgendeinem der vorangegangenen Ansprüche 1 bis 5, **dadurch gekennzeichnet, dass** der Photoleiter (3) von dem Verriegelungsmittel (6) lösbar ist.

9. Eine Anordnung gemäß Anspruch 8, **dadurch gekennzeichnet, dass** ein Photoleiter (3) an dem Verriegelungsmittel (6), von dem ein Photoleiter (3) gelöst wurde, befestigt werden kann.

10. Eine Anordnung gemäß irgendeinem der vorangegangenen Ansprüche, **dadurch gekennzeichnet, dass** der Lichtempfangsteil (5) an einem Vorsprung (11) angeordnet ist, der wesentlich enger ist als der lichtemittierende Teil (12) des Photoleiters (3).

11. Eine Anordnung gemäß irgendeinem der vorangegangenen Ansprüche, **dadurch gekennzeichnet, dass** ein Versteifungselement (10) an dem Photoleiter (3) angeordnet ist, um den Teil des Photoleiters (3), der an dem Verriegelungsmittel (6) angeordnet ist, zu versteifen.

12. Eine elektronische Vorrichtung, vorzugsweise ein Mobiltelefon, **dadurch gekennzeichnet, dass** sie die in Anspruch 1 beanspruchte Anordnung aufweist.

13. Eine elektronische Vorrichtung gemäß Anspruch 12, **dadurch gekennzeichnet, dass** das zu illuminierende Objekt eine Tastatur, eine Taste, eine an ihrem Abdeckungsteil angeordnete illuminierte Dekoration oder ein Display ist.

## Revendications

1. Agencement d'éclairage comprenant :
une source de lumière de production de lumière (2) agencée sur une base de montage (1), et
un photoconducteur (3), dont la partie de réception de lumière (5) est conçue pour être agencée dans une relation de transmission de lumière avec la source de lumière (2), le photoconducteur étant agencé pour diriger la lumière vers un objet à éclairer, l'agencement comprenant également
des moyens de verrouillage (6) pour fixer la partie de réception de lumière (5) du photoconducteur (3) à la même base de montage (1) que la source de lumière (2), dans lequel le photoconducteur (3) est un photoconducteur à film mince ou un photoconducteur à film ayant une épaisseur au plus de 0,5 mm, **caractérisé en ce que**
les moyens de verrouillage (6) sont agencés sur une partie de liaison (4) qui est fixée à ladite base de montage (1), et **en ce que**
la partie de liaison (4) est un composant monté en surface et la base de montage (1) est une carte de circuit, et **en ce que**
la partie de liaison (4) est un composant en plusieurs parties, dont une première partie (4a) est agencée pour être fixée à la base de montage (1) et dont une deuxième partie (4b) est agencée pour être fixée à la première partie (4a) de sorte qu'une structure fixant le photoconducteur (3) à la base de montage (1) est formée.

2. Agencement selon la revendication 1, **caractérisé en ce que** la base de montage (1) est une carte de circuit rigide.

3. Agencement selon la revendication 1, **caractérisé en ce que** la base de montage (1) est une carte de circuit souple.

4. Agencement selon l'une quelconque des revendications précédentes, **caractérisé en ce que** la partie de liaison (4) comprend un matériau translucide et **en ce que** la partie de liaison (4) est agencée pour agir en tant que photoconducteur.

5. Agencement selon la revendication 4, **caractérisé en ce que** la partie de liaison (4) est agencée pour changer la direction de la lumière se propageant dans celle-ci.

6. Agencement selon l'une quelconque des revendications précédentes, **caractérisé en ce que** le photoconducteur (3) comprend une contrepartie (8) qui est agencée sur les moyens de verrouillage (6) de manière à réaliser un verrouillage par forme entre le photoconducteur (3) et les moyens de verrouillage (6).

7. Agencement selon l'une quelconque des revendications 1 à 6 précédentes, **caractérisé en ce qu'**il y a un verrouillage par friction entre le photoconducteur (3) et les moyens de verrouillage (6).

8. Agencement selon l'une quelconque des revendications 1 à 5, **caractérisé en ce que** le photoconducteur (3) peut être détaché des moyens de verrouillage (6).

9. Agencement selon la revendication 8, **caractérisé en ce qu'**un photoconducteur (3) peut être fixé aux moyens de verrouillage (6), desquels un photoconducteur (3) a été détaché.

10. Agencement selon l'une quelconque des revendications précédentes, **caractérisé en ce que** la partie de réception de lumière (5) est agencée sur une protubérance (11) qui est essentiellement plus étroite que la partie d'émission de lumière (12) du photoconducteur (3).

11. Agencement selon l'une quelconque des revendications précédentes, **caractérisé en ce qu'**un élément de raidissement (10) est agencé sur le photoconducteur (3) pour raidir la partie du photoconducteur (3) qui est agencée sur les moyens de verrouillage (6).

12. Dispositif électronique, de préférence un téléphone mobile, **caractérisé en ce qu'**il comprend l'agencement selon la revendication 1.

13. Dispositif électronique selon la revendication 12, **caractérisé en ce que** l'objet à éclairer est un clavier, une touche, une décoration éclairée agencée sur sa partie de recouvrement, ou un afficheur.
